Europäisches Patentamt

European Patent Office

Office européen des brevets

(11) Veröffentlichungsnummer: **0 278 489**
**A1**

## EUROPÄISCHE PATENTANMELDUNG

(21) Anmeldenummer: 88101942.6

(22) Anmeldetag: 10.02.88

(51) Int. Cl.⁴: **F24D 3/16** , **E04C 2/26** , **E04C 2/52**

(30) Priorität: **13.02.87 DE 3704508**

(43) Veröffentlichungstag der Anmeldung:
**17.08.88 Patentblatt 88/33**

(84) Benannte Vertragsstaaten:
**ES GR**

(71) Anmelder: **May, Hans Josef**
**Ulmenweg 17**
**D-5860 Iserlohn(DE)**

Anmelder: **Schnettler, Roland**
**Schwerter Strasse 138**
**D-5800 Hagen(DE)**

Anmelder: **Schweinsberg, Bernhard**
**Zur Barkuhle 13**
**D-4630 Bochum(DE)**

(72) Erfinder: **May, Hans Josef**
**Ulmenweg 17**
**D-5860 Iserlohn(DE)**
Erfinder: **Schnettler, Roland**
**Schwerter Strasse 138**
**D-5800 Hagen(DE)**
Erfinder: **Schweinsberg, Bernhard**
**Zur Barkuhle 13**
**D-4630 Bochum(DE)**

(74) Vertreter: **Schröter, Martin, Dipl.-Ing.**
**Im Tückwinkel 22**
**D-5860 Iserlohn(DE)**

(54) Bauelement für Flächenheizungs- oder -kühlsysteme und Verfahren zur Herstellung solcher Bauelemente.

(57) Vorgeschlagen wird ein Bauelement für Flächenheizungs-oder -kühlsysteme in der Art einer selbsttragenden Sandwichkonstruktion mit einer den Obergurt bildenden tragfähigen Wärmeleitplatte 501 und einer mit dieser im Abstand über eine Wärmedämmschicht 504 aus entsprechendem Kunststoff, vorzugsweise einem geschäumten Polyurethan, schubfest verbundenen tragfähigen Unterplatte 502. An der Unterseite der Wärmeleitplatte 501 sind wärmeleitend verbunden Wärmeträgerkanäle 503 untergesetzt und mit der Platte verbunden.

Vorgeschlagen wird ebenfalls ein Verfahren zur Herstellung solcher Bauelemente, bei dem die die Wärmeträgerkanäle 503 bildenden Profile durch den Druck einer zwischen den von außen abgestützten und auf Abstand gehaltenen Ober-und Unterplatten 501 und 502 unter seitlicher Abdichtung des Abstandsraumes zwischen den Platten aufschäumend eingebrachten Wärmedämmschicht 504 an der Unterseite der die Wärmeleitplatte bildenden Oberplatte 501 befestigt werden.

FIG. 6

531a 503 501
531 502 504

**Bauelement für Flächenheizungs-oder -kühlsysteme und Verfahren zur Herstellung solcher Bauelemente**

Die Erfindung betrifft ein Bauelement für Flächenheizungs-oder -kühlsysteme, bestehend aus mindestens einem Wärmeträgerkanal und einer mit diesem wärmeleiten verbundenen Platte, die an ihrer mit dem Wärmeleitkanal verbundenen Unterseite mit einer Wärmedämmschicht versehen ist, und ein Verfahren zur Herstellung solcher Bauelemente.

Zur Erstellung von Fußbodenheizungen sind bereits nach der DE-OS 26 58 673 miteinander zu verbindende Bauelemente bekannt, die aus einem dünnen plattenförmigen Wärmeleitblech bestehen, an dessen Unterseite Rohrprofile als Wärmeleitkanäle befestigt sind. Die Unterseite dieser dünnen Wärmeleitbleche ist mit einer Wärmedämmschicht abgekleidet. Solche in Rastermaßen herzustellende Bauelemente dienen einem systemartigen Aufbau von Fußbodenheizungen sowohl in Neubauten als auch in Altbauten.

An diese Fußbodenheizungen wird die Anforderung gestellt, daß ihre Bauelemente leicht an der Baustelle zu montieren sind, einen innigen wärmeleitenden Kontakt mit dem Fußbodenaufbau ermöglichen und eine Wärmeisolierung gegenüber dem Untergrund gewährleisten. Diese bekannten plattenartigen Bauelemente lassen sich bei relativ geringer Fußbodenaufbauhöhe verlegen. Sie erfordern jedoch die Integrierung in den abstützenden Aufbau sowie eine ausreichende tragfähige Abdeckung nach oben. Durch die miteinander verbundenen Bauelemente strömt nach entsprechender Montage in geeigneter Führung das Wärmeträgermedium, vorzugsweise Warmwasser im Niedertemperaturbereich. Die zugeführte Wärme wird über das Wärmeleitblech verteilt.

Aus der JP-OS 59-225 229 ist ein Bauelement für Flächenheizungssysteme bekannt, bei dem die die Wärmeträgerkanäle bildenden Profile in Heizschlangenform vertieft in einer Styroporschicht eingelagert sind. Unter Wärme-und Druckeinwirkung sind jeweils gegen die Dämmstoffschicht oben und unten Platten gepreßt, die auf diese Weise mit der Dämmstoffschicht verbunden werden sollen. Nachteilig ist bei dieser Konstruktion der sich ergebende Abstand der Wärmeträgerkanäle zur benachbarten Platte. Ein solcher Plattenverbund bedarf bei auftretenden Tragkräften der Abstützung, da über die Wärmedämmstoffschicht in der Art von Styropor keine Schubkräfte in nennenswertem Maße übertragen werden können.

Die Aufgabe der Erfindung besteht darin, Bauelemente für Flächenheizungs-oder -kühlsysteme für Fußböden, Wände Decken oder Dächer vorzuschlagen, die unabhängig von abdeckenden bzw. verkleidenden oder abstützenden Mitteln zu einem selbsttragenden Aufbau verlegt werden können, sowie ein entsprechendes Verfahren zur Herstellung solcher Bauelemente vorzuschlagen.

Gelöst wird die Erfindungsaufgabe mit einem Bauelement mit sämtlichen Merkmalen des Anspruchs 1 sowie durch ein Verfahren mit den Merkmalen des Anspruchs 6.

Das vorgeschlagene Bauelement ist selbsttragend und kann daher als Teil eines Fußboden-, Wand-, Dach-bzw. Deckensystems eingesetzt werden. Es ist in der Lage, infolge der schubfesten Verbindung der Oberplatte mit der Unterplatte Zug-und Druckspannungen aufzunehmen.

Nach bevorzugten Ausführungsarten der Erfindung liegen die die Wärmeleitkanäle bildenden Profile mit einem oder mehreren abgeflachten Abschnitten an der Unterseite der die Wärmeleitplatte bildenden Oberplatte an. Solche Bauelemente können nach einem erfindungsgemäßen Verfahren hergestellt werden, bei dem die Befestigung der die Wärmeträgerkanäle bildenden Profile durch den Druck der aufschäumend eingebrachten Wärmedämmschicht zwischen den beiden Platten befestigt werden. Solche Verfahren können kontinuierlich entsprechend Anspruch 7 durchgeführt werden. Eine diskontinuierliche Herstellungsart in entsprechenden Abstützformen ist ebenfalls möglich.

Zur Erfindung gehört auch ein Vorschlag, die Wärmeträgerkanäle an beiden Platten vorzusehen, beispielsweise beim Einsatz solcher Bauelemente zur Ausbildung von Zwischenwänden.

Von entscheidender Bedeutung für die Erfindung ist die direkte wärmeleitende Verbindung der Wärmeträgerkanäle mit einer oder beiden selbsttragenden Platten und die schubfeste Verbindung der beiden Platten durch den geeigneten Kunststoff, der die Wärmedämmschicht bildet.

Anhand abgebildeter Ausführungsbeispiele und eines Verfahrensschema wird die Erfindung im folgenden näher erläutert. Es zeigen:

Fig. 1 einen Teilschnitt durch ein Bauelement, bei dem an der Unterseite der die Wärmeleitplatte bildenden Oberplatte Rohre als Wärmeträgerkanäle befestigt sind,

Fig. 2 einen Teilschnitt durch ein Bauelement, bei dem die Wärmeträgerkanäle durch ein trapezförmig profiliertes Stützblech gebildet sind,

Fig. 3 einen Teilschnitt durch ein Bauelement, bei dem die Wärmeträgerkanäle in der Wärmedämmschicht einseitig ausgebildet sind,

Fig. 4 einen Teilschnitt durch ein Bauelement, bei dem die Wärmeträgerkanäle an beiden Seiten in der Wärmedämmschicht ausgebildet sind,

Fig. 5 einen Teilschnitt durch ein Bauelement, bei dem die Wärmeträgerkanäle durch ein an der Unterseite der Oberplatte befestigtes, trapezförmig profiliertes Blech gebildet sind,

Fig. 6 einen Teilschnitt durch ein Wandelement, bei dem ein im Querschnitt halbringförmiges Hohlprofil den Wärmeträgerkanal bildet,

Fig. 7 eine Ansicht einer schematischen Vorrichtung zur Herstellung von Bauelementen und

Fig. 8 einen Querschnitt durch die Vorrichtung nach Fig. 7.

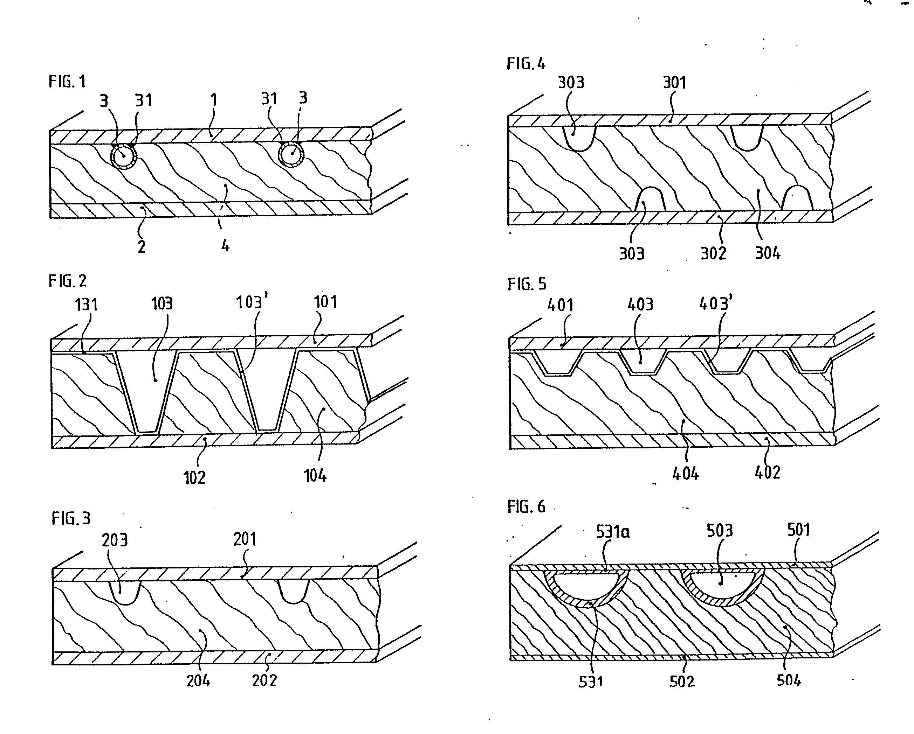

Die in Figuren 1 - 6 dargestellten Bauelemente dienen zur Ausbildung von Flächenheizungs-oder -kühlsystemen in Fußböden, Wänden, Decken oder Dächern. Sie werden in Rastermaßen hergestellt und mit bekannten Montagetechniken statisch und bezüglich ihrer Wärmeträgerkanäle abgedichtet miteinander verbunden. Aufgrund der spezifischen Sandwichkonstruktion der einzelnen Bauelemente und deren Verbindung entstehen selbsttragende Systeme.

Das Bauelement nach Fig. 1 besteht aus der die Wärmeleitplatte bildenden Oberplatte 1 und der mit dieser mit Abstand durch die Wärmedämmschicht 4, vorzugsweise aus geschäumten Polyurethan, schubfest verbundenen Unterplatte 2. Die Oberplatte besteht dabei vorzugsweise aus Metall, während die Unterplatte auch aus Kunststoff bestehen kann. An der Unterseite der Oberplatte 1 sind mit Lötverbindungen 31 Rohre als Wärmeträgerkanäle 3 wärmeleitend befestigt.

Zur Erhöhung der schubfesten Verbindung zwischen einer die Wärmeleitplatte bildenden Oberplatte 101 und einer Unterplatte 102 ist entsprechend dem Bauelement nach Fig. 2 ein trapezförmiges Stützblech 103' vorgesehen, welches mit entsprechenden Befestigungsabschnitten 131 an der Unterseite der Oberplatte 101 und mit entsprechenden Abschnitten an der Unterplatte 102 befestigt ist. Dieses trapezförmig profilierte Stützblech 103' bildet die Wärmeträgerkanäle 103. Die Zwischenräume sind mit einem Schaumkunststoff 104 ausgefüllt.

Bei den Bauelementen nach den Figuren 3 und 4 sind die Wärmeträgerkanäle 203 bzw. 303 in der Wärmedämmschicht 204 bzw. 304 aus Hartschaumkunststoff eingeformt. Sie werden abgeschlossen durch die die Wärmeleitplatte bildenden Oberplatten 201 und 301 und beim Ausführungsbeispiel nach Fig.4 auch durch die Unterplatte 302, die bei dieser Ausführungsart ebenfalls eine Wärmeleitplatte ist. Die schubfesten Verbindungen bilden wiederum die Wärmedämmschichten 204 bzw. 304. Sie verbinden jeweils die Oberplatten 201 bzw. 301 mit den Unterplatten 202 bzw. 302.

Beim Ausführungsbeispiel nach Fig. 5 ist an der Unterseite der Oberplatte 401 eine trapezförmige Profilplatte 403' in schubfester Verbindung wärmeleitend untergesetzt. Auf diese Weise werden die Wärmeträgerkanäle 403 ausgebildet. Die schubfeste Verbindung zwischen der Profilplatte 403' und der Unterplatte 402 bildet die geeignete Wärmedämmschicht 404.

Das in Fig. 6 dargestellte Bauelement besteht wiederum aus zwei im Abstand voneinander angeordneten tragfähigen Platten 501, 502, die durch den eingeschäumten Hartkunststoffschaum 504 - schubfest miteinander verbunden sind. Das als Wärmeträgerkanal 503 dienende Profil 531 ist im Querschnitt halbringförmig. Die abgeflachte Verbindungswand trägt die Ziffer 531a. Mit dieser Wand liegt das Profil direkt wärmeleitend an der Innenseite der Oberplatte 501 an.

Bauelemente nach den Figuren 5 und 6 können in vorteilhafter Weise dadurch hergestellt werden, daß ihre die Wärmeträgerkanäle 403 bzw. 503 bildenden Profile 403' bzw. 531 durch den Druck einer zwischen den von außen abgestützten und auf Abstand gehaltenen Ober-und Unterplatten 401, 501 bzw. 402, 502 unter seitlicher Abdichtung des Abstandsraumes zwischen den Platten aufschäumend eingebrachten Wärmedämmschicht an der Unterseite der die Wärmeleitplatte bildenden Oberplatte 401 bzw. 501 befestigt werden.

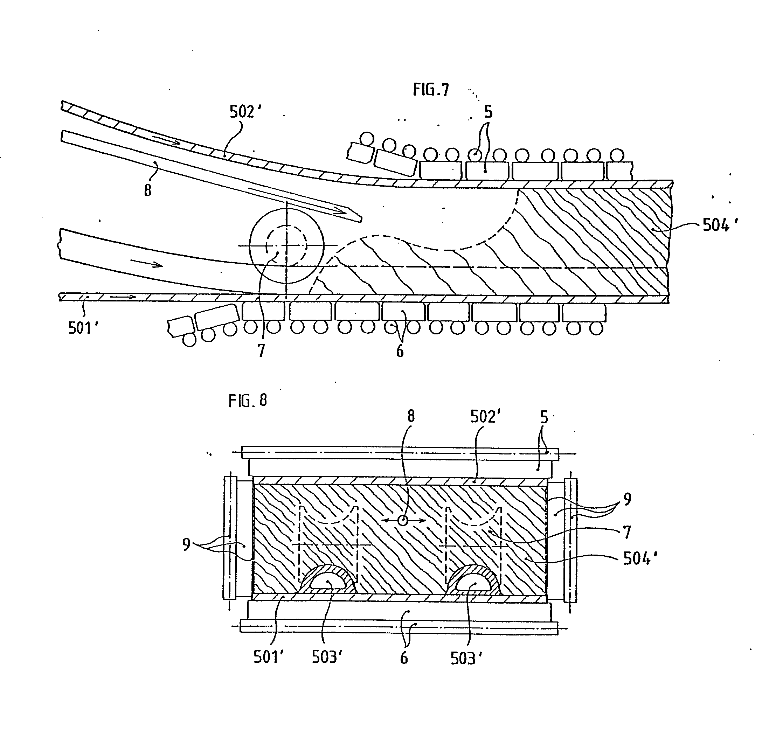

Ein kontinuierliches Herstellungsverfahren ist aus den Abbildungen gemäß den Figuren 7 und 8 ersichtlich. Das mit der Ziffer 501' bezeichnete, die Oberplatten bildende Metallband wird auf Abstützrollen und -platten 6 einer entsprechenden Vorrichtung zugeführt. Auf der Innenseite dieses Metallbandes 501' wird das den Wärmeträgerkanal bildende Profil rohr 503' aufgelegt, vorzugsweise mit einer Andrückrolle 7 angedrückt, gegebenenfalls noch unter Anbringung einer Haftschicht. Im geeigneten Abstand zum Metallband 501' wird darüber synchrongesteuert ein die spätere Unterplatte bildendes Band 502' zugeführt, welches von oben ebenfalls durch Rollen und Platten 5 abgestützt ist. Den Abstand beider Bänder bestimmt die geforderte Stärke der Wärmedämmschicht. Der Abstandszwischenraum wird seitlich durch entsprechende Vorrichtungen 9 abgedichtet und abgestützt. Über die vorzugsweise pendelnd bewegte Vorrichtung 8 wird im Zuführungsbereich der beiden Bänder aufschäumender flüssiger Kunststoff, vorzugsweise Polyurethan, eingebracht. Dieser aushärtende Kunststoffschaum füllt den Abstand zwischen den beiden Bändern aus und preßt unter dem entstehenden Druck das Profil 503' gegen die Innenseite des Metallbandes 501'. Auf diese Weise

werden die den Wärmeträgerkanal bildenden Profile 503' fixiert und am Metallband 501' gehalten. Nach dem Aushärten können die entstehenden Bauelemente durch Abtrennung vom Strang hergestellt werden.

Es ist jedoch auch möglich, die die Wärmeträgerkanäle bildendenProfile absatzweise zuzuführen. Ebenso sind diskontinuierliche Verfahren möglich, bei denen die Bauelemente in entsprechenden Abstützformen hergestellt werden.

## Ansprüche

1. Bauelement für Flächenheizungs-oder -kühlsysteme, bestehend aus mindestens einem Wärmeträgerkanal und einer mit diesem wärmeleitend verbundenen Platte, die an ihrer mit dem Wärmeleitkanal verbundenen Unterseite mit einer Wärmedämmschicht versehen ist, **gekennzeichnet durch** eine selbsttragende Sandwichkonstruktion mit einer den Obergurt bildenden tragfähigen Wärmeleitplatte (1, 101, 201, 301, 401, 501) und einer mit dieser in Abstand über die Wärmedämmschicht aus einem entsprechenden Kunststoff, vorzugsweise einem geschäumten Polyurethan, schubfest verbundenen tragfähigen Unterplatte (2, 102, 202, 302, 402, 502).

2. Bauelement nach Anspruch 1, **dadurch gekennzeichnet**, daß die Wärmeträgerkanäle (403) durch eine an der Unterseite der Wärmeleitplatte (401) befestigte, vorzugsweise trapezförmig im Querschnitt profilierte Platte (403') gebildet sind.

3. Bauelement nach Anspruch 1, **dadurch gekennzeichnet**, daß die die Wärmeleitkanäle (503) bildenden Profile (531) jeweils mit einem oder mehreren abgeflachten Abschnitten (531) an der Unterseite der Oberplatte (501) anliegen.

4. Bauelement nach Anspruch 3, **gekennzeichnet durch** ein den Wärmeträgerkanal (503) bildendes Hohlprofil mit halbring-oder ringabschnittsförmigem Querschnitt.

5. Bauelement nach Anspruch 1, **dadurch gekennzeichnet**, daß in der Wärmedämmschicht (104, 204, 304, 404) eine oder mehrere Wärmeträgerkanäle (103, 203, 303, 403) ausgebildet sind, die von der Oberplatte (101, 201, 301) und/oder der Unterplatte (302) abgedeckt sind.

6. Verfahren zur Herstellung von Bauelementen nach einem der Ansprüche 1 bis 4, **dadruch gekennzeichnet**, daß die die Wärmeträgerkanäle (403, 503) bildenden Profile (403', 503') durch den Druck einer zwischen den von außen abgestützten und auf Abstand gehaltenen Ober-und Unterplatten (401, 501 bzw. 402, 502) unter seitlicher Abdichtung des Abstandsraumes zwischen den Platten aufschäumend eingebrachten Wärmedämmschicht an der Unterseite der die Wärmeleitplatte bildenden Oberplatte (401, 501) befestigt werden.

7. Verfahren nach Anpsruch 6, **dadurch gekennzeichnet**, daß zwischen einem kontinuierlich zugeführten, die Oberplatte (501) bildenden Metallband (501') und einem darüber mit Abstand parallel und synchron gesteuert zugeführten, die Unterplatte bildenden Metallband (502') ein aushärtender Kunststoffschaum (504'), vorzugsweise Polyurethan, eingebracht wird, wobei die die Wärmeträgerkanäle bildenden Profile (503') vor Einbringung des Kunststoffschaumes auf der Innenseite des die Oberplatte bildenden Metallbandes (501') anliegend zugeführt werden.

8. Verfahren nach Anspruch 7, **dadurch gekennzeichnet**, daß die die Wärmeträgerkanäle bildenden Profile (503') mit einer Haftschicht auf der Innenseite des die Oberplatte bildenden Metallbandes (501') gehalten werden.

FIG. 1

FIG. 2

FIG. 3

FIG. 4

FIG. 5

FIG. 6

0 278 489

FIG.7

FIG. 8

0 278 489

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 10, Nr. 238 (M-508)[2294], 16. August 1986; & JP-A-61 70 326 (MITSUBISHI ELECTRIC CORP.) 11-04-1986 * Zusammenfassung * | 1 | F 24 D 3/16 E 04 C 2/26 E 04 C 2/52 |
| Y | Idem | 2 | |
| A | Idem --- | 6 | |
| X | PATENT ABSTRACTS OF JAPAN, Band 8, Nr. 230 (M-333)[1667], 23. Oktober 1984; & JP-A-59 112 135 (SHIYOUWA ARUMINIUMU K.K.) 28-06-1984 * Zusammenfassung * --- | 1,6 | |
| A | PATENT ABSTRACTS OF JAPAN, Band 10, Nr. 83 (M-466)[2140], 2. April 1986; & JP-A-60 223 922 (MITSUBISHI DENKI K.K.) 08-11-1985 --- | 1,2 | |
| Y | PATENT ABSTRACTS OF JAPAN, Band 9, Nr. 29 (M-356)[1752], 7. Februar 19785; & JP-A-59 173 637 (YAZAKI SOUGIYOU K.K.) 01-10-1984 * Zusammenfassung * --- | 2 | **RECHERCHIERTE SACHGEBIETE (Int. Cl.4)** F 24 D |
| A | DE-A-3 500 880 (FISCHER) ----- | | |

Der vorliegende Recherchenbericht wurde für alle Patentansprüche erstellt

| Recherchenort | Abschlußdatum der Recherche | Prüfer |
|---|---|---|
| DEN HAAG | 29-04-1988 | VAN GESTEL H.M. |